# EUROPÄISCHE PATENTSCHRIFT

(11) **EP 2 769 656 B1**
(45) Veröffentlichungstag und Bekanntmachung des Hinweises auf die Patenterteilung: **23.08.2017**
(21) Anmeldenummer: 14155863.5
(22) Anmeldetag: 20.02.2014
(51) Int. Cl.: A47K 3/30, E06B 3/54, F16B 5/12

(54) **Sicherungsklammer**
Retaining clip
Agrafe de sécurité

(30) Priorität: 21.02.2013 DE 202013001930 U
(43) Veröffentlichungstag der Anmeldung: 27.08.2014
(73) Patentinhaber: KERMI GmbH, 94447 Plattling (DE)
(72) Erfinder: Stinglhammer, Robert, 94428 Eichendorf (DE); Zißler, Horst, 94362 Neukirchen (DE)
(74) Vertreter: Patentanwälte Bressel und Partner mbB

(56) Entgegenhaltungen:
- DE-A1-102010 016 289
- DE-C1- 4 119 628

## Beschreibung

Die Erfindung betrifft eine Sicherungsklammer nach dem Oberbegriff des Anspruchs 1, mit einem rahmenlosen, flächigen Wandelement aus Glas- oder Kunstglas mit einem vertikalen Hohlprofil und mit einem im Hohlprofil angeordneten Halteprofil, welches einen Basisbereich und zwei Seitenbereiche umfasst, wobei das Wandelement im oberen Randbereich mit einer Öffnung versehen ist und im Halteprofil durch ein klebendes Dichtmittel befestigt und abgedichtet ist.

Insbesondere bei der Installation von Wand- oder Trennelementen für Duschabtrennungen, kann ein sicherer Fertigungsprozess nur in einem kleinen Fertigungsfenster (Zeit, Verarbeitungstemperatur, Vorbereitung der zu verklebenden Teile, etc.) stattfinden. Außerdem unterliegen alle bekannten Klebstoffe einem Alterungsprozess, der durch bestimmte Umstände wie Temperatur, UV-Einstrahlung, Feuchtigkeit, Reinigungsmittel etc. beschleunigt wird. Speziell im Duschkabinenbau spielen die vom Endkunden zum Einsatz gebrachten Reinigungsmittel eine wichtige Rolle, die über Dauerfestigkeit einer Glas- oder Kunstglasscheibe in einem Halteprofil, insbesondere einem Aluminiumprofil entscheiden können. Die genannten Faktoren wie Alterungsprozess, Fertigungsprozess, Einsatz beim Endkunden machen Verklebungen zu einem in jeder Hinsicht komplizierten und nicht immer nachvollziehbaren Verfahren und unter Umständen zu nicht mehr einschätzbaren Sicherheitsrisiko.

Aus der DE 195 10 234 C2 ist eine Anordnung zum Haltern einer Scheibe, insbesondere einer Glasscheibe in einer Duschabtrennung bekannt, die aber nicht der zusätzlichen Sicherung dient. Neben der Klammer muss ein Einsatz verwendet werden, der sich im Hohlprofil abstützt und die Schenkel der Klammer zusammenhält und somit den an den Schenkeln der Klammer vorgesehenen Vorsprung in der in der Scheibe vorgesehenen Bohrung sichert. Die DE 41 19 628 C1 offenbart eine Sicherungsklammer mit einem rahmenlosen, flächigen Wandelement aus Glas oder Kunstglas mit einem vertikalen Hohlprofil und mit einem im Hohlprofil angeordneten Halteprofil, welches einen Basisbereich und zwei Seitenbereiche umfasst, wobei das Wandelement im oberen Randbereich mit einer Öffnung versehen ist, wobei die Sicherungsklammer an wenigstens einem der zwei Seitenbereiche des Hohlprofils vertikal einklemmbar ist, wobei die Klammer mindestens eine Lasche aufweist, die beim Einführen der Wandelementes in das Halteprofil des Hohlprofils federnd in die im Wandelement vorgesehene Öffnung eingreift und sichert, wobei die Klammer aus einem flächigen Gebilde besteht und - eine erste abgewinkelte Lasche aufweist, die im eingebauten Zustand auf dem oberen Rand eines der Seitenbereiche des Hohlprofils aufliegt, - weiter in vertikaler Richtung auf das Wandelement wirkende Schenkel sowie - mindestens eine in Richtung Wandelement horizontal abgewinkelte federnde Lasche vorgesehen sind. Dabei kommt neben der Profilschiene ein weiteres Profil zur Anwendung welches auf die vertikale Längskante des Trennelementes aufgeschoben wird. Der zum Einsatz kommende u-förmige Sicherheitsbügel weist parallele Schenkel auf und wird von oben in Kanäle der Profilschiene und auf das weitere Profil aufgeschoben.

Die Aufgabe der Erfindung besteht deshalb darin, eine neue Sicherungsklammer für eine Duschabtrennung der o. g. Art vorzustellen, die eine Lösung in einem Halteprofil geklebter Duschabtrennungen aufgrund der o. g. Faktoren vermeidet.

Erfindungsgemäß wird diese Aufgabe durch die Merkmale des Anspruchs 1 gelöst. Vorteilhafte Weiterbildungen der Erfindung sind in den untergeordneten Ansprüchen enthalten.

Demnach beinhaltet die Erfindung eine Sicherungsklammer für ein rahmenloses, flächiges Wandelement aus Glas- oder Kunstglas mit einem vertikalen Hohlprofil mit einem im Hohlprofil angeordneten Halteprofil, welches einen Basisbereich und zwei Seitenbereiche umfasst, wobei das Wandelement im oberen Randbereich mit einer Öffnung versehen ist und im Halteprofil durch ein klebendes Dichtmittel befestigt und abgedichtet ist. Die Sicherungsklammer ist dabei erfindungsgemäß an wenigstens einem der zwei Seitenbereiche des Hohlprofils vertikal einklemmbar, wobei die Klammer eine Lasche aufweist, die beim Einführen der Wandelementes in das Halteprofil des Hohlprofils federnd in die im Wandelement vorgesehene Öffnung eingreift und sichert. Die Klammer besteht dabei aus einem flächigen Gebilde, welches eine erste abgewinkelte Lasche aufweist, die im eingebauten Zustand auf dem oberen Rand eines der Seitenbereiche des Hohlprofils aufliegt, weiter in vertikaler Richtung auf das Wandelement wirkende Schenkel sowie mindestens eine in Richtung Wandelement horizontal abgewinkelte federnde Lasche vorgesehen sind. Die horizontal abgewinkelte federnde Lasche ist dabei entsprechend der Geometrie der im Wandelement vorgesehenen Öffnung pilzkopfartig ausgebildet.

Vorteilhaft ist zudem vorgesehen, dass die Klammer aus Federstahl bzw. Edelstahl besteht. Die erste abgewinkelte Lasche verhindert dabei, dass die Sicherungsklammer zu weit in das Hohlprofil eingedrückt wird. Die seitlich aufgestellten Schenkel führen vorteilhaft zu einem bestimmten Anpressdruck der den Sitz der Sicherung im Profil sicherstellt und eine Lageverschiebung verhindert. Durch die dadurch entstehende Vorspannung verkanten sich die Schenkel mit dem Profil und verhindern eine Lageverschiebung. Dadurch wird der Sitz der Klammer beim Handling sichergestellt.

Durch die Winkelstellung der horizontal abgewinkelten federnden Lasche entsteht eine schiefe Ebene. Beim Einführen des Wandelementes wird diese Lasche in Richtung Seitenbereich des Halteprofils gedrückt. Aufgrund der Federwirkung schnappt die Lasche dann in die im Wandelement vorhandene Öffnung ein. Die Geometrie der Lasche, die der Geometrie der vorgesehenen Öffnung entspricht, verhindert dabei, dass das Wandelement herausfallen kann.

Die Erfindung wird im Folgenden anhand von Zeichnungen näher erläutert. Es zeigen:
- Fig. 1: eine erfindungsgemäße Sicherungsklammer in einer isometrischen Ansicht,
- Fig. 2: die erfindungsgemäße Sicherungsklammer in einer Seitenansicht,
- Fig. 3: die erfindungsgemäße Sicherungsklammer in einer Draufsicht,
- Fig. 4: eine Explosionsdarstellung mit Wandelement, Sicherungsklammer und Hohlprofil,
- Fig. 5: eine Schnittdarstellung von Wandelement mit Hohlprofil und eingesetzter Sicherungsklammer.
- Fig. 6: eine weitere Variante der erfindungsgemäßen Sicherungsklammer.

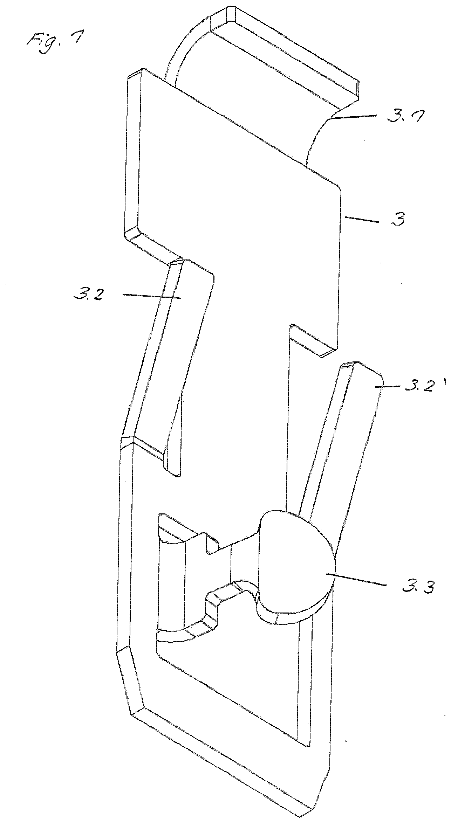

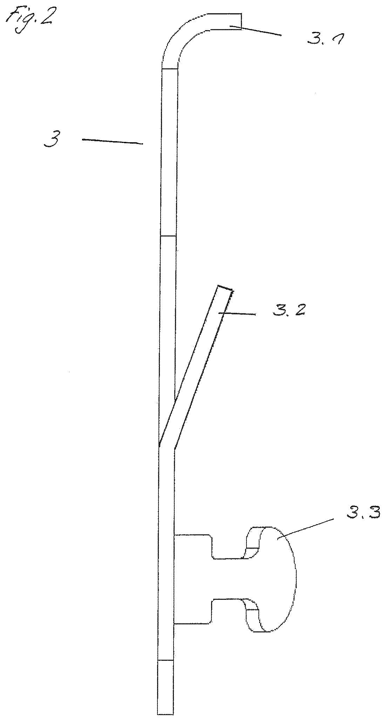

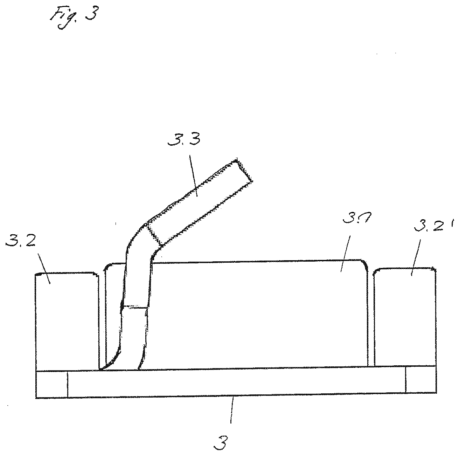

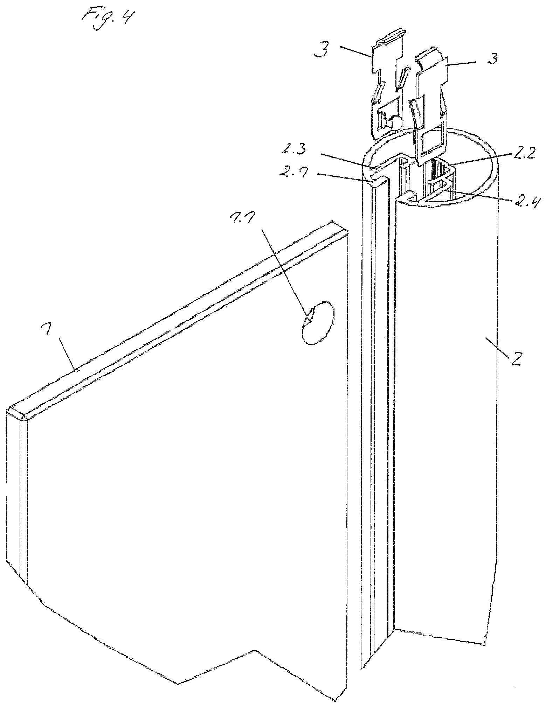

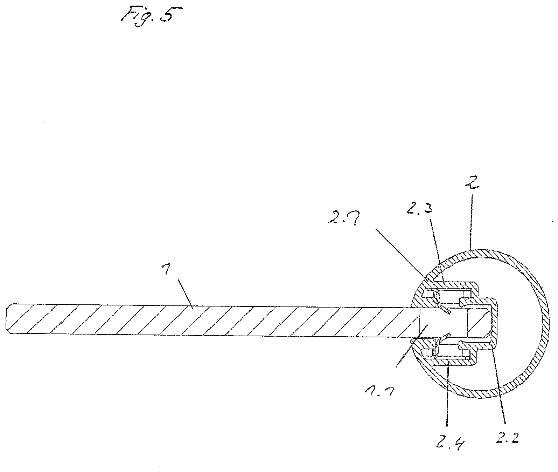

In den Fig. 1 bis 5 ist eine Variante einer erfindungsgemäßen Sicherungsklammer 3 dargestellt. Die erfindungsgemäße Sicherungsklammer 3 dient der Sicherung eines rahmenlosen, flächigen Wandelementes 1 aus Glas- oder Kunstglas mit einem vertikalen Hohlprofil 2 mit einem im Hohlprofil 2 angeordneten Halteprofil 2.1 , welches einen Basisbereich 2.2 und zwei Seitenbereiche 2.3, 2.4 umfasst. Das Wandelement 1 ist im oberen Randbereich mit einer Öffnung 1.1 versehen und im Halteprofil 2.1 durch ein klebendes Dichtmittel befestigt und abgedichtet ist. Die Sicherungsklammer 3 ist dabei an den beiden Seitenbereichen 2.3, 2.4 des Hohlprofils 2 vertikal einklemmbar. Die Klammer 3 ist dazu vorzugsweise aus Federstahl bzw. einem anderen federnden Material gefertigt und besteht aus einem flächigen Gebilde mit einer ersten abgewinkelten Lasche 3.1, die im eingebauten Zustand auf dem oberen Rand eines der Seitenbereiche 2.3, 2.4 des Hohlprofils 2 aufliegt. Weiter sind in vertikaler Richtung auf das Wandelement 1 wirkende Schenkel 3.2, 3.2' sowie eine in Richtung Wandelement 1 horizontal abgewinkelte federnde Lasche 3.3 vorgesehen. Die horizontal abgewinkelte federnde Lasche 3.3 ist pilzkopfartig ausgebildet. Vorteilhaft verhindert diese Geometrie der Lasche dabei, dass das Wandelement aus dem Hohlprofil herausfallen kann. Die horizontal abgewinkelte federnde Lasche 3.3 greift beim Einführen des Wandelementes 1 in das Halteprofil 2.1 des Hohlprofils 2 federnd in die im Wandelement 1 vorgesehene Öffnung 1.1 ein und sichert es.

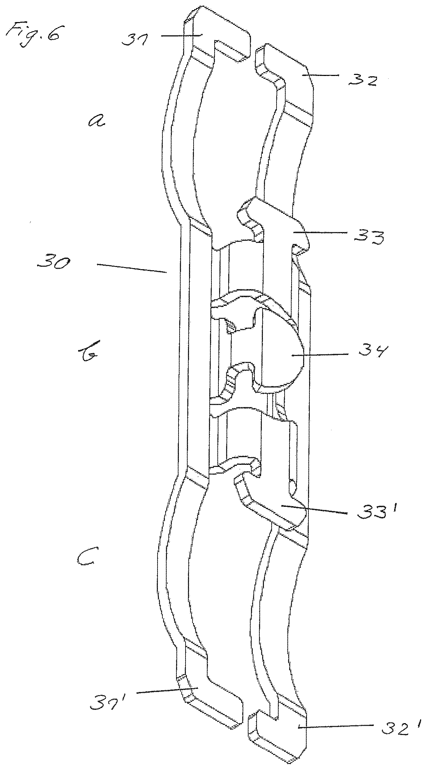

In der Fig. 6 wird eine weitere Ausführungsvariante der erfindungsgemäßen Sicherungsklammer gezeigt. Die Klammer 30 besteht aus einem flächigen Gebilde mit drei Abschnitten a, b, c. Der Abschnitt b ist dabei mittig zwischen den Abschnitten a, c angeordnet und weist eine in Richtung Wandelement 1 horizontal abgewinkelte federnde Lasche 34 auf, die analog der der Lasche 3.3 ausgebildet ist. Die horizontal abgewinkelte federnde Lasche 34 greift beim Einführen des Wandelementes 1 in das Halteprofil 2.1 des Hohlprofils 2 federnd in die im Wandelement 1 vorgesehene Öffnung 1.1 ein und sichert es. Die Abschnitte a, c weisen in vertikaler Richtung auf das Wandelement 1 wirkende Schenkel 31, 32, 33 bzw. 31',32', 33' auf. Die beiden Abschnitte a, c sind identisch ausgebildet, aber entgegengesetzt zueinander angeordnet und durch den Abschnitt b voneinander beabstandet. Die vertikal aufgestellten Schenkel führen vorteilhaft zu einem bestimmten Anpressdruck der den Sitz der Sicherung im Profil sicherstellt und eine Lageverschiebung verhindert. Durch die Winkelstellung der horizontal abgewinkelten federnden Lasche 34 entsteht eine schiefe Ebene. Beim Einführen des Wandelementes 1 wird die Lasche 34 in Richtung Seitenbereich des Halteprofils gedrückt. Aufgrund der Federwirkung schnappt die Lasche 34 dann in die im Wandelement 1 vorhandene Öffnung 1.1 ein. Die Geometrie der Lasche 34, die der Geometrie der Öffnung 1.1 entspricht, verhindert dabei, dass das Wandelement 1 herausfallen kann. Diese anschlagslose Variante einer Sicherungsklammer, kann an jeder beliebigen Position im vertikalen Hohlprofil 2 eingesetzt werden.

## Patentansprüche

1. Sicherungsklammer mit einem rahmenlosen, flächigen Wandelement (1) aus Glas- oder Kunstglas mit einem vertikalen Hohlprofil (2) und mit einem im Hohlprofil angeordneten Halteprofil (2.1), welches einen Basisbereich (2.2) und zwei Seitenbereiche (2.3, 2.4) umfasst, wobei das Wandelement (1) im oberen Randbereich mit einer Öffnung (1.1) versehen ist und im Halteprofil (2.1) durch ein klebendes Dichtmittel befestigt und abgedichtet ist, wobei die Sicherungsklammer (3, 30) an wenigstens einem der zwei Seitenbereiche (2.3, 2.4) des Hohlprofils (2) vertikal einklemmbar ist, wobei die Klammer (3, 30) mindestens eine Lasche (3.3, 34) aufweist, die beim Einführen der Wandelementes (1) in das Halteprofil (2.1) des Hohlprofils (2) federnd in die im Wandelement (1) vorgesehene Öffnung (1.1) eingreift und sichert, wobei die horizontal abgewinkelte federnde Lasche (3.3) entsprechend der Geometrie der Öffnung (1.1) pilzkopfartig ausgebildet ist, und wobei die Lasche (3.3) eine in Richtung Wandelement (1) abgewinkelte federnde Lasche (3.3) ist und die Klammer (3) aus einem flächigen Gebilde besteht und weiter - eine andere abgewinkelte Lasche (3.1) aufweist, die im eingebauten Zustand auf dem oberen Rand eines der Seitenbereiche (2.3, 2.4) des Hohlprofils (2) aufliegt, - weiter in vertikaler Richtung auf das Wandelement (1) wirkende Schenkel (3.2, 3.2').

2. Sicherungsklammer nach Anspruch 1, **dadurch gekennzeichnet, dass**
- die Klammer (30) aus einem flächigen Gebilde mit drei Abschnitten (a, b, c) besteht,
- der Abschnitt (b) mittig zwischen den Abschnitten (a, c) angeordnet ist und mindestens eine in Richtung Wandelement (1) horizontal abgewinkelte federnde Lasche (34) aufweist,
- die Abschnitte (a, c) in vertikaler Richtung auf das Wandelement (1) wirkende Schenkel (31, 32, 33, 31'32'33') aufweisen
- die Abschnitte (a, c) identisch ausgebildet sind aber entgegengesetzt zueinander angeordnet sind und durch den Abschnitt (b) voneinander beabstandet sind.

3. Sicherungsklammer nach einem der Ansprüchen 1 oder 2, **dadurch gekennzeichnet, dass** die Klammer aus Federstahl bzw. einem anderen federnden Material besteht.

## Claims

1. Securing clamp with a frameless flat wall element (1) made of glass or artificial glass with a vertical hollow profile (2) and with a holding profile (2.1) arranged in the hollow profile, which comprises a base area (2.2) and two side areas (2.3, 2.4), wherein the wall element (1) is provided in the upper edge area with an opening (1.1) and is fixed and sealed in the holding profile (2.1) by an adhesive sealing agent, wherein the securing clamp (3, 30) can be clamped vertically at least at one of the two side areas (2.3, 2.4) of the hollow profile (2), wherein the clamp (3, 30) comprises at least one tab (3.3, 34), which, when the wall element (1) is introduced into the holding profile (2.1) of the hollow profile (2), engages with spring force into the opening (1.1) provided in the wall element (1) and secures it, wherein the horizontally angled spring-loaded tab (3.3) is configured in the form of a mushroom head, corresponding to the geometry of the opening (1.1), and wherein the tab (3.3) is a spring-loaded tab (3.3) angled in the direction of the wall element (1) and the clamp (3) consists of a flat construct and further comprises another angled tab (3.1), which in the installed state is in contact on the upper edge of one of the shoulder areas (2.3, 2.4) of the hollow profile (2), and also limbs (3.2, 3.2') are provided which take effect in the vertical direction onto the wall element (1).

2. Securing clamp according to claim 1, **characterised in that**
- the clamp (30) consists of a flat construct with three sections (a, b, c),
- the section (b) is arranged in the middle between the sections (a, c), and comprises at least one spring-loaded tab (34) angled horizontally in the direction of the wall element(1),
- the sections (a, c) comprise limbs (31, 32, 33, 31', 32', 33') taking effect in the vertical direction onto the wall element (1),
- the sections (a, c) are configured as identical or arranged mutually opposed to one another, and are spaced apart from one another by the section (b).

3. Securing clamp according to any one of claims 1 or 2, **characterised in that** the clamp consists of spring steel or another spring-force material.

## Revendications

1. Agrafe de sécurité comprenant un élément mural (1) plat sans cadre en verre ou en verre synthétique, comprenant un profil creux (2) vertical et un profil de maintien (2.1) disposé dans le profil creux, lequel comprend une zone de base (2.2) et deux zones latérales (2.3, 2.4), dans laquelle l'élément mural (1) est pourvu d'une ouverture (1.1) dans la zone de bord supérieure et est fixé et étanchéifié dans le profil de maintien (2.1) par un moyen d'étanchéité adhésif, dans laquelle l'agrafe de sécurité (3, 30) peut être coincée de manière verticale au niveau d'au moins une des deux zones latérales (2.3, 2.4) du profil creux (2), dans laquelle l'agrafe (3, 30) présente au moins une bride (3.3, 34), qui, lors de l'introduction de l'élément mural (1) dans le profil de maintien (2.1) du profil creux (2), vient en prise de manière élastique avec l'ouverture (1.1) prévue dans l'élément mural (1) pour la bloquer, dans laquelle la bride (3.3) élastique coudée de manière horizontale est réalisée à la manière d'une tête de champignon conformément à la géométrie de l'ouverture (1.1), et dans laquelle la bride (3.3) est une bride (3.3) élastique coudée dans la direction de l'élément mural (1) et l'agrafe (3) est constituée d'une structure plate et présente en outre une autre bride (3.1) coudée, qui, dans l'état monté, repose sur le bord supérieur d'une des zones latérales (2.3, 2.4) du profil creux (2),
en outre des branches (3.2, 3.2') agissant dans la direction verticale sur l'élément mural (1).

2. Agrafe de sécurité selon la revendication 1, **caractérisée en ce que**
- l'agrafe (30) est constituée d'une structure plate pourvue de trois sections (a, b, c),
- la section (b) est disposée au centre entre les sections (a, c) et présente au moins une bride (34) élastique coudée de manière horizontale en direction de l'élément mural (1),
- les sections (a, c) présentent des branches (31, 32, 33, 31', 32', 33') agissant dans la direction verticale sur l'élément mural (1),
- les sections (a, c) sont réalisées de manière identique mais en étant disposées à l'opposé les unes des autres et sont espacées les unes des autres par la section (b).

3. Agrafe de sécurité selon l'une quelconque des revendications 1 ou 2, **caractérisée en ce que** l'agrafe est constituée d'acier à ressort ou d'un autre matériau élastique.
